# EUROPEAN PATENT APPLICATION

(11) **EP 4 403 018 A2**
(43) Date of publication of application: **24.07.2024**
(21) Application number: 24153005.4
(22) Date of filing: 19.01.2024
(51) Int. Cl.: A01D 41/14

(54) **RESIDUE DEFLECTION ASSEMBLY FOR A CROP LOSS MONITORING SYSTEM**

(30) Priority: 19.01.2023 US 202363439982 P
(71) Applicant: CNH Industrial America LLC, New Holland, PA 17557 (US); CNH Industrial Belgium N.V., 8210 Zedelgem (BE)
(72) Inventor: MISSOTTEN, Bart M.A., New Holland, 17557 (US); JONGMANS, Dre Waltherus Joachim, New Holland, 17557 (US); HUNT, Cory Douglas, New Holland, 17557 (US); MARTIN, Jethro, New Holland, 17557 (US); LINDE, Karl Robert, New Holland, 17557 (US)
(74) Representative: Keltie LLP

(57) **Abstract**

A residue deflection assembly (400) for a crop loss monitoring system (300) includes a residue deflector (402) configured to be positioned rearward of a row unit (204) of a header (200) of an agricultural harvester (100) relative to a direction of travel (16) of the agricultural harvester. The residue deflector is configured to direct residue away from a field of view (306) of a camera (304) of the crop loss monitoring system and to enable crop material to be present within the field of view of the camera.

## Description

### BACKGROUND

The present disclosure relates generally to a residue deflection assembly for a crop loss monitoring system.

An agricultural harvester may be used to harvest agricultural crops, such as barley, beans, beets, carrots, corn, cotton, flax, oats, potatoes, rye, soybeans, wheat, or other plant crops. The agricultural harvester may include a header, which may be configured to efficiently harvest certain types of crops. For example, a corn header may be configured to efficiently harvest corn. The corn header may include row units that include components configured to separate ears of corn from stalks as the agricultural harvester travels through a field. Conveyors (e.g., augers) carry the ears of corn toward a processing system of the agricultural harvester, and the stalks are deposited on the field.

Certain row units include feed rollers that engage a stalk and drive the stalk downwardly and rearwardly. As the stalk is driven downwardly, the ear engages deck plates positioned above the feed rollers, thereby separating the ear from the stalk. The ear moves rearwardly to the conveyors, and the stalk is deposited on the field.

### SUMMARY OF INVENTION

In certain embodiments, a residue deflection assembly for a crop loss monitoring system includes a residue deflector configured to be positioned rearward of a row unit of a header of an agricultural harvester relative to a direction of travel of the agricultural harvester. The residue deflector is configured to direct residue away from a field of view of a camera of the crop loss monitoring system and to enable crop material to be present within the field of view of the camera.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an embodiment of an agricultural harvester having a corn header;
FIG. 2 is a perspective view of an embodiment of a corn header that may be employed within the agricultural harvester of FIG. 1;
FIG. 3 is a schematic view of an embodiment of a residue deflection assembly that may be employed within the corn header of FIG. 2;
FIG. 4 is a schematic view of another embodiment of a residue deflection assembly that may be employed within the corn header of FIG. 2;
FIG. 5 is a schematic view of a further embodiment of a residue deflection assembly that may be employed within the corn header of FIG. 2; and
FIG. 6 is a schematic view of an embodiment of a residue deflection assembly that may be employed within the corn header of FIG. 2.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

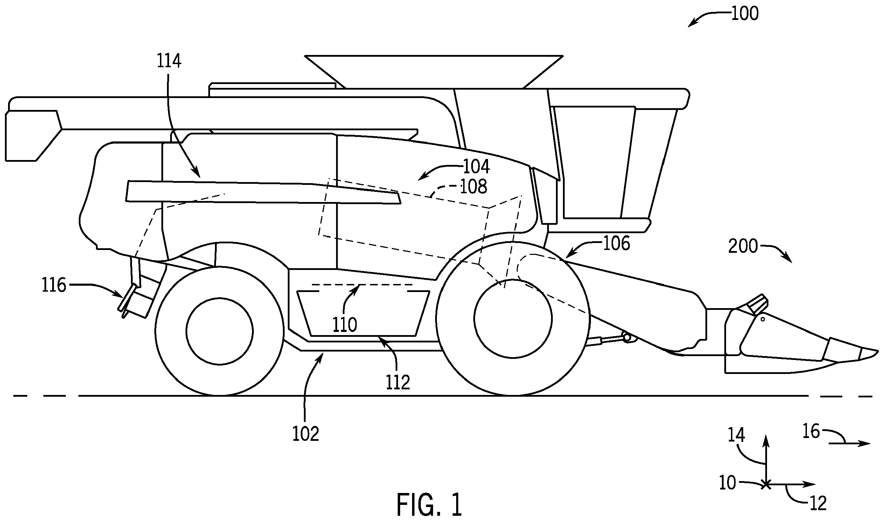

FIG. 1 is a side view of an embodiment of an agricultural harvester 100 having a corn header 200 (e.g., agricultural header). The agricultural harvester 100 includes a chassis 102 configured to support the corn header 200 and an agricultural crop processing system 104. As described in greater detail below, the corn header 200 is configured to separate ears of corn from stalks and to transport the ears of corn toward an inlet 106 of the agricultural crop processing system 104 for further processing of the ears of corn. The agricultural crop processing system 104 receives the ears of corn from the header 200 and separates desired crop material from crop remainder. For example, the agricultural crop processing system 104 may include a thresher 108 having a cylindrical threshing rotor that transports the ears of corn in a helical flow path through the agricultural harvester 100. In addition to transporting the ears of corn, the thresher 108 may separate desired crop material (e.g., corn kernels) from the crop remainder, such as husks and cobs, and enable the desired crop material to flow into a cleaning system 110 located beneath the thresher 108. The cleaning system 110 may remove debris from the desired crop material and transport the desired crop material to a storage compartment 112 within the agricultural harvester 100. The crop remainder may be transported from the thresher 108 to a crop remainder handling system 114, which may remove the crop remainder from the agricultural harvester 100 via a crop remainder spreading system 116 positioned at the aft end of the agricultural harvester 100.

As discussed in detail below, the header 200 includes multiple row units configured to separate ears of corn from stalks and to direct the stalks to the field. The ears of corn are directed toward the inlet 106, and the stalks and the leaves extending from the stalks remain on the field. To facilitate discussion, the agricultural harvester 100 and/or its components (e.g., the corn header 200) may be described with reference to a lateral axis or direction 10, a longitudinal axis or direction 12, and a vertical axis or direction 14. The agricultural harvester 100 and/or its components (e.g., the corn header 200) may also be described with reference to a direction of travel 16. Furthermore, as used herein, "crop material" refers to the material, including desired crop material and crop remainder, collected by the header and directed toward the inlet (e.g., corn ears). The agricultural processing system 104 receives the crop material (e.g., corn ears) and, as previously discussed, separates the desired crop material (e.g., corn kernels) from the crop remainder (e.g., husks and cobs). In addition, as used herein, "residue" refers to the material separated from the crop material by the header, such as the stalks and the leaves.

If the agricultural harvester 100 is not configured and/or operated effectively, the corn header 200 may direct a fraction (e.g., a small fraction) of the ears of corn to the field, thereby reducing the amount of collected crop material. Accordingly, the corn header 200 may include a crop loss monitoring system configured to detect crop material (e.g., corn ears, corn kernels) behind the corn header 200 (e.g., on the field). For example, the crop loss monitoring system may include one or more cameras configured to monitor the region behind the header. The camera(s) may be communicatively coupled to a controller configured to identify crop material within the region (e.g., on the field) based on feedback from the camera(s). The controller may be configured to output a signal to a user interface indicative of instructions to inform an operator of the amount of crop loss. Additionally or alternatively, the controller may be configured to control various parameters of the agricultural harvester (e.g., deck plate spacing, feed roller speed, ground speed of the agricultural harvester, etc.) to reduce the detected crop loss.

Unfortunately, the stalks and the leaves extending from the stalks may block the field of view of each camera, thereby reducing the effectiveness of the crop loss monitoring system. Accordingly, as discussed in detail below, the crop loss monitoring system may include a residue deflection assembly configured to direct the residue away from the field of view of the camera. In certain embodiments, the residue deflection assembly includes a residue deflector positioned rearward of a row unit of the corn header 200 relative to the direction of travel 16. The residue deflector is configured to direct residue (e.g., stalks and leaves) away from the field of view of the camera and to enable the crop material (e.g., corn ears) to be present within the field of view of the camera. Because the residue deflection assembly may direct the residue away from the field of view of the camera, the camera may effectively monitor the region behind the corn header for crop material, thereby increasing the effectiveness of the crop loss monitoring system.

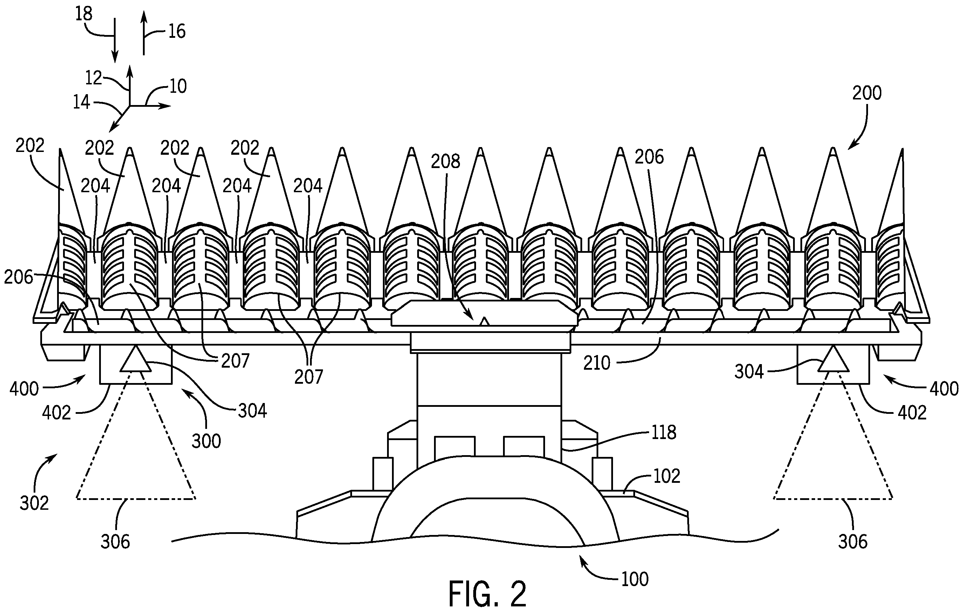

FIG. 2 is a perspective view of an embodiment of a corn header 200 that may be employed within the agricultural harvester 100 of FIG. 1. In the illustrated embodiment, the corn header 200 includes multiple dividers 202 configured to divide rows of a crop (e.g., corn). The dividers 202 may be evenly spaced along the lateral axis 10 of the corn header 200. As the corn header 200 moves along the direction of travel 16, the dividers 202 may direct crops from each row to a respective row unit 204. Each row unit 204 is configured to separate the corn ear from the stalk, carry the corn ear toward a respective auger 206, and direct the stalk/leaves to the field. For example, in certain embodiments, each row unit 204 includes a pair of feed rollers configured to grip the stalk and to rotate in opposite directions, thereby driving the stalk rearwardly (e.g., along a rearward direction 18) and toward the field (e.g., vertically downward; below the header 200). In addition, in certain embodiments, each row unit 204 includes a pair of deck plates positioned over the pair of feed rollers. Each deck plate extends along the longitudinal axis 12 of the corn header 200, and the pair of deck plates are separated from one another along the lateral axis 10 to define a gap. Further, in certain embodiments, each row unit 204 includes a pair of chains (e.g., with lugs) that are configured to drive or push the corn ear along the pair of deck plates toward the respective auger 206. The pair of deck plates are spaced apart so that the gap is sized to enable the stalk and leaves to fall through the gap and to block the corn ear from falling through the gap. In some embodiments, the pair of deck plates are adjustable and may be driven (e.g., via an actuator) toward and away from one another along the lateral axis 10 to change a size (e.g., width) of the gap. A hood 207 is positioned rearward of each divider 202 and between adjacent row units 204 to cover various components, such as the actuator that drives the pair of deck plates, linkage(s), and so forth. While each row unit includes feed rollers, deck plates, and chains in the embodiment disclosed above, in other embodiments, at least one row unit may include other/additional suitable component(s) configured to facilitate separating the corn ear from the stalk, directing the corn ear to the respective auger, and directing the stalk to the surface of the agricultural field.

From the row units 204, the ears of corn may be directed to one of a pair of augers 206 configured to convey the ears of corn inwardly along the lateral axis 10 to a conveyor 208 at the lateral center of the corn header 200. As illustrated, the augers 206 extend along a substantial portion of the width of the corn header 200 (e.g., along the lateral axis 10). The augers 206 may be driven by a driving mechanism (e.g., electric motor, hydraulic motor, etc.). As the agricultural harvester 100 moves through the field, the dividers 202 direct the rows of crops into the row units 204. The row units 204 engage the crops within the field and separate the ears of corn from the stalks, and the augers 206 transport the ears of corn to the conveyor 208, which directs the ears of corn toward the inlet of the agricultural crop processing system. In the illustrated embodiment, the dividers 202, the row units 204, the augers 206, and the conveyor 208 are supported by a frame 210 of the corn header 200. In addition, the header frame 210 is coupled to a feeder house 118 of the agricultural harvester 100. In certain embodiments, the feeder house 118 is configured to move the corn header 200 with respect to the vertical axis 14 to control the height of the corn header 200 above the surface of the field.

In the illustrated embodiment, the corn header 200 includes a crop loss monitoring system 300 configured to detect crop material (e.g., corn ears) within a region 302 behind the corn header 200 relative to the direction of travel 16. As previously discussed, each row unit 204 is configured to separate the corn ear from the stalk, carry the corn ear toward a respective auger 206, and direct the stalk/leaves to the field. However, if the agricultural harvester 100 is not configured and/or operated effectively, the corn header 200 may direct a fraction (e.g., a small fraction) of the ears of corn to the field, thereby reducing the amount of collected crop material. For example, if the spacing between deck plates of the row units 204 is too wide, certain ears of corn may pass between the deck plates. Furthermore, if the rotational speed of the feed rollers of the row units 204 is too slow, certain ears of corn may pass over the top of the row units. In addition, if the ground speed of the agricultural harvester 100 along the direction of travel 16 is too fast, certain ears of corn may pass over the top of the row units. As a result, one or more ears of corn may be present within the region 302 behind the corn header 200.

In the illustrated embodiment, the crop loss monitoring system 300 includes multiple cameras 304, and each camera 304 is configured to output a respective sensor signal indicative of an image of the region 302 behind the corn header 200. Each camera 304 may monitor the region 302 within any suitable range of the electromagnetic spectrum. For example, at least one camera may be configured to monitor the region 302 within the visible light spectrum and output a respective sensor signal indicative of a visible light image. Additionally or alternatively, at least one camera may be configured to monitor the region 302 within an infrared spectrum and output a respective sensor signal indicative of an infrared image. For example, in certain operating conditions, an infrared image may provide enhanced contrast between the crop material (e.g., corn ears) and the soil (e.g., as compared to a visible light image) due to a temperature difference between the crop material and the soil.

In certain embodiments, the crop loss monitoring system 300 also includes a controller communicatively coupled to the cameras 304. The controller is configured to identify crop material (e.g., crop ears) within the region 302 based on the images. For example, the controller may use any suitable image processing technique(s) to identify the crop material (e.g., including artificial intelligence, such as machine learning). The controller may identify crop material on the surface of the field within the region 302 and crop material moving through the air within the region 302.

In the illustrated embodiment, the region 302 is positioned between the corn header 200 and the crop remainder spreading system of the agricultural harvester 100 (e.g., along the direction of travel 16). Accordingly, the region 302 does not include the crop remainder output by the crop remainder spreading system. As a result, less material may be located within the region 302, thereby increasing the effectiveness of detecting crop material within the region 302. While the region 302 is positioned between the corn header and the crop remainder spreading system in the illustrated embodiment, in other embodiments, the region may be positioned aft of the crop remainder spreading system (e.g., along the direction of travel 16).

In the illustrated embodiment, the crop loss monitoring system 300 includes two cameras 304, and each camera is coupled to the header frame 210. Furthermore, in the illustrated embodiment, each camera 304 is laterally positioned between respective row units 204. However, in other embodiments, at least one camera may be laterally aligned with a respective row unit. While cameras are coupled to the header frame in the illustrated embodiment, in other embodiments, one or more cameras may be coupled to any other suitable structure(s) of the agricultural harvester (e.g., the cab, a body panel, the feeder house, the chassis, etc.). Furthermore, while the crop loss monitoring system 300 includes two cameras 304 in the illustrated embodiment, in other embodiments, the crop loss monitoring system may include more or fewer cameras (e.g., 1, 3, 4, or more). For example, in certain embodiments, the crop loss monitoring system may include one camera laterally aligned with each row unit.

In the illustrated embodiment, each camera 304 is directed generally in the rearward direction 18 (e.g., generally along the longitudinal axis 12), such that a portion of the region 302 is within a field of view 306 of the camera 304. However, in other embodiments, at least one camera may be directed in another suitable direction. For example, at least one camera may be coupled to the header frame and oriented at an angle (e.g., 10 degrees, 20 degrees, 30 degrees, 45 degrees, 50 degrees, etc.) relative to the longitudinal axis. Furthermore, in certain embodiments, at least one camera may be coupled to the feeder house and directed generally along the lateral axis. In addition, in certain embodiments, at least one camera may be coupled to the agricultural harvester chassis and directed generally in the direction of travel. Each camera 304 may be directed such that a portion of the region 302 is within the field of view 306 of the camera 304. As used herein, "field of view" refers to the physical environment corresponding to the image captured by the camera.

As previously discussed, the controller of the crop loss monitoring system 300 is configured to identify the presence of crop material within the region 302 monitored by the camera(s) 304. In response to identifying the presence of crop material within the region 302, the controller may output a signal to a user interface indicative of instructions to inform an operator of the amount of crop loss (e.g., if the amount of crop loss is greater than a threshold value). Additionally or alternatively, the controller may be configured to control various parameters of the agricultural harvester (e.g., deck plate spacing, feed roller speed, ground speed of the agricultural harvester, etc.) to reduce the detected crop loss. For example, the controller may control the deck plate actuator to reduce the spacing between the deck plates, the controller may control a feed roller motor to increase the rotational speed of the feed rollers, the controller may control an agricultural harvester speed control system to reduce the speed of the agricultural harvester, or a combination thereof, in response to determining the amount of crop loss is greater than a threshold value.

In the illustrated embodiment, the crop loss monitoring system 300 includes residue deflection assemblies 400 configured to direct the residue away from the fields of view of the respective cameras 304. Each residue deflection assembly 400 includes a residue deflector 402 positioned rearward of the row units 204 of the corn header 200 relative to the direction of travel 16 (e.g., behind the row units 204 along the rearward direction 18). Each residue deflector 402 is configured to direct residue (e.g., stalks and leaves) away from the field of view 306 of the respective camera 304 and to enable the crop material (e.g., corn ears) to be present within the field of view 306 of the camera 304. Because each residue deflection assembly 400 may direct the residue away from the field of view 306 of the respective camera 304, less residue may be present within the field of view. Accordingly, the cameras 304 may effectively monitor the region behind the corn header for crop material, thereby increasing the effectiveness of the crop loss monitoring system 300. In the illustrated embodiment, a residue deflection assembly 400 is associated with each camera 304 of the crop loss monitoring system 300 (e.g., the residue deflection assembly 400 is configured to direct residue away from the field of view 306 of a respective camera 304). However, in other embodiments, multiple residue deflection assemblies may be associated with at least one camera, and/or at least one camera may not be associated with a residue deflection assembly. For example, the crop loss monitoring system may include 1, 2, 3, 4, 5, 6, 7, 8, or more residue deflection assemblies.

As discussed in detail below, in certain embodiments, at least one residue deflection assembly includes a fluid source, and the residue deflector includes a fluid outlet. The fluid outlet is configured to direct a flow of fluid from the fluid source to the residue, thereby directing the residue away from the field of view of the respective camera. Furthermore, in certain embodiments, at least one residue deflector includes a wheel configured to engage the residue, thereby directing the residue away from the field of view of the respective camera. In certain embodiments, the wheel may be driven to rotate by a motor. In addition, in certain embodiments, at least one residue deflector includes a body configured to engage the residue, thereby directing the residue away from the field of view of the respective camera. In such embodiments, the respective residue deflection assembly may include a reel configured to cooperate with the body to direct the residue away from the field of view of the respective camera.

In certain embodiments, each row unit includes a knife assembly positioned below the respective deck plates. The knife assembly includes a rotating knife configured to chop the residue as the stalk moves downwardly through the deck plates. Due to the rotation of the knife, the residue may be expelled from each row unit generally along the rearward direction. In addition, the residue and the crop material, if present, may move through the air within the fields of view of the cameras. Accordingly, the cameras may be configured to monitor the air within the region behind the corn header. Because the knife assemblies may chop the crop material, the controller may be configured to identify portions of the crop material (e.g., corn kernels) within the region (e.g., as compared to substantially intact crop material, such as whole corn ears). Furthermore, the residue deflection assemblies may be configured to direct the residue within the air away from the fields of view of the cameras to reduce the amount of residue within the fields of view, thereby enhancing the effectiveness of the crop loss monitoring system.

In embodiments in which each row unit does not include a knife assembly or the knife assembly is not in operation, the residue and the crop material, if present, may lay on the surface of the field within the region behind the corn header. Accordingly, the cameras may be configured to monitor the surface of the field within the region behind the corn header. In addition, the controller may be configured to identify substantially intact crop material (e.g., corn ears) within the region (e.g., as compared to portions of the crop material, such as corn kernels). Furthermore, the deflection assemblies may be configured to direct the residue on the surface of the field away from the fields of view of the cameras to reduce the amount of residue within the fields of view, thereby enhancing the effectiveness of the crop loss monitoring system.

While the crop loss monitoring system and the residue deflection assemblies are disclosed herein with regard to corn headers, the crop loss monitoring system and the residue deflection assemblies may be employed within other suitable types of headers, such as draper headers. In such configurations, the crop loss monitoring system may be configured to identify other types of crop material within the region behind the header, such as soybeans, wheat, etc. In addition, each residue deflection assembly may be configured to direct other types of residue away from the field of view of the respective camera.

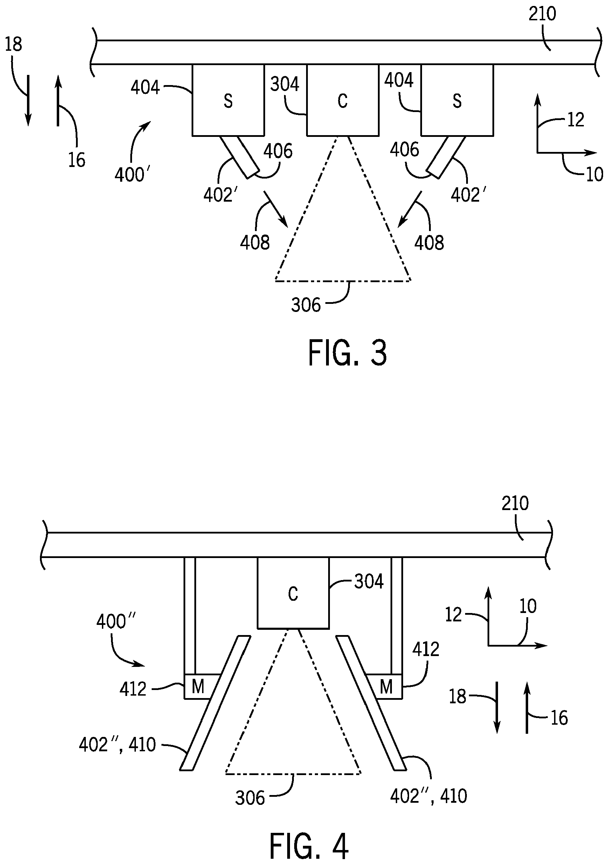

FIG. 3 is a schematic view of an embodiment of a residue deflection assembly 400' that may be employed within the corn header of FIG. 2. In the illustrated embodiment, the residue deflection assembly 400' includes two fluid sources 404. Each fluid source 404 is configured to output a flow of fluid. For example, the fluid may include air, and the fluid source may include a fan or a blower configured to output a flow of air. The fan/blower may be driven to rotate by a suitable motor, such as an electric motor, a hydraulic motor, or a pneumatic motor. Furthermore, in certain embodiments, the fluid source may include a compressed air cylinder configured to output a flow of air. In addition, in certain embodiments, the fluid may include another suitable type of fluid, such as nitrogen, water, etc. In such embodiments, the fluid source may include a suitable device configured to output the respective fluid (e.g., nitrogen cylinder, water pump, etc.).

Furthermore, in the illustrated embodiment, the residue deflection assembly 400' includes two residue deflectors 402', and each residue deflector 402' (e.g., conduit, hose, tube, pipe, manifold, etc.) includes a respective fluid outlet 406. Each fluid outlet 406 is configured to direct the flow of fluid 408 (e.g., air) from the respective fluid source 404 to the residue, thereby directing the residue away from the field of view 306 of the camera 304. However, because the crop material may be significantly more dense than the residue, the flow of fluid may have a significantly smaller affect on the crop material. Accordingly, the residue deflectors 402' may direct the residue away from the field of view 306 of the camera 304, while enabling the crop material to be present within the field of view 306 of the camera 304. Because the amount of residue within the field of view 306 of the camera 304 may be reduced, the camera may identify crop material (e.g., corn ears) within the region behind the header more effectively. As a result, the effectiveness of the crop loss monitoring system may be enhanced.

While the residue deflection assembly 400' includes two fluid sources 404 and two fluid outlets 406 in the illustrated embodiment, in other embodiments, the residue deflection assembly may include more or fewer fluid sources (e.g., 1, 3, 4, or more) and/or more or fewer fluid outlets (e.g., 1, 3, 4, or more). For example, in certain embodiments, the residue deflection assembly may include a single fluid source and multiple fluid outlets. Furthermore, in certain embodiments, the residue deflection assembly may include multiple fluid sources and a single fluid outlet. In addition, in the illustrated embodiment, each fluid source 404 and each residue deflector 402' is coupled to the header frame 210. However, in other embodiments, at least one fluid source and/or at least one residue deflector may be coupled to another suitable structure of the agricultural harvester (e.g., the cab, a body panel, the feeder house, the chassis, etc.). Furthermore, each fluid outlet 406 may have any suitable shape, such as round, elliptical, rectangular, square, etc.

In addition, in the illustrated embodiment, each fluid outlet 406 is configured to direct the respective flow of fluid 408 at least partially crosswise to the direction of travel 16 of the agricultural harvester. For example, in certain embodiments, each fluid outlet 406 may be configured to direct the flow of fluid 408 at an angle of about 5 degrees to about 85 degrees, at an angle of about 10 degrees to about 80 degrees, at an angle of about 20 degrees to about 70 degrees, at an angle of about 30 degrees to about 60 degrees, or at an angle of about 45 degrees relative to the direction of travel 16. However, in other embodiments, at least one fluid outlet may be configured to direct the flow of fluid at an angle of about 90 degrees relative to the direction of travel, and/or at least one fluid outlet may be configured to direct the flow of fluid at an angle of about 0 degrees relative to the direction of travel. Furthermore, in the illustrated embodiment, each fluid outlet 406 is configured to direct the respective flow of fluid 408 toward the field of view 306 of the camera 304. However, in other embodiments, at least one fluid outlet may be configured to direct the flow of fluid away from the field of view. In addition, each fluid outlet may be configured to direct the respective flow of fluid at any suitable angle relative to the lateral axis and/or relative to the vertical axis. Furthermore, in certain embodiments, the at least one fluid outlet may be configured to direct the flow of fluid along a path that intersects a lens of the camera and/or passes in front of (e.g., directly in front of) the lens, thereby removing debris (e.g., residue, dirt, water, etc.) from the surface of the lens and/or substantially reducing accumulation of debris (e.g., residue, dirt, water, etc.) on the surface of the lens. For example, in certain embodiments, at least one fluid outlet may be directed toward the lens of the camera.

Furthermore, the height of the fluid outlets 406 above the surface of the field may be particularly selected based on the configuration of the header. For example, in embodiments in which each row unit does not include a knife assembly or the knife assembly is not in operation, the residue and the crop material may lay on the surface of the field. Accordingly, the fluid outlets 406 may be positioned proximate to the surface of the field. However, in embodiments in which each row unit includes an operating knife assembly, the residue and the crop material may move through the air. Accordingly, the fluid outlets 406 may be positioned proximate to the vertical position of the knife blade assemblies. While the residue deflection assembly includes fluid sources in the illustrated embodiment, in other embodiments, the residue deflection assembly may include at least one fluid sink (e.g., vacuum source) configured to receive a flow of air from a fluid inlet of the residue deflector. In such embodiments, the fluid sink may establish a flow of fluid across the field of view that directs the residue away from the field of view.

FIG. 4 is a schematic view of another embodiment of a residue deflection assembly 400" that may be employed within the corn header of FIG. 2. In the illustrated embodiment, the residue deflection assembly 400" includes two residue deflectors 402", and each residue deflector 402" includes a wheel 410. Each wheel 410 is configured to direct the residue away from the field of view 306 of the camera 304. Each wheel 410 may have any suitable configuration for directing the residue away from the field of view of the camera. For example, at least one wheel may be smooth, at least one wheel may be fluted, at least one wheel may have protrusions extending radially from a central portion, or a combination thereof.

Each wheel 410 is configured to direct the residue away from the field of view 306 of the camera 304 via rotation of the wheel. In the illustrated embodiment, the residue deflection assembly 400" includes motors 412 (e.g., electric motors, pneumatic motors, or hydraulic motors) configured to drive the wheels 410 to rotate. In the illustrated embodiment, each wheel 410 is driven to rotate by a single respective motor 412. However, in other embodiments, at least one wheel may be driven to rotate by multiple motors, and/or a single motor may drive multiple wheels to rotate (e.g., via a suitable drive mechanism, such as a solid or flexible shaft). Furthermore, in certain embodiments, at least one wheel may be driven to rotate via contact with another object (e.g., motor(s) are not coupled to the wheel(s)). For example, at least one wheel may be driven to rotate via contact with the surface of the field, and/or at least one wheel may be driven to rotate via contact with the residue.

In the illustrated embodiment, the residue deflection assembly 400" includes two wheels 410. However, in other embodiments, the residue deflection assembly may include more or fewer wheels (e.g., 1, 3, 4, or more). Furthermore, in the illustrated embodiment, each wheel 410 is angled relative to the direction of travel 16. The angle of each wheel 410 relative to the direction of travel 16 may be about 5 degrees to about 85 degrees, about 10 degrees to about 80 degrees, about 20 degrees to about 70 degrees, about 30 degrees to about 60 degrees, or about 45 degrees. However, in other embodiments, at least one wheel may be aligned with the direction of travel 16. Furthermore, at least one wheel may be angled relative to the vertical axis and/or relative to the longitudinal axis. In addition, the position of each wheel (e.g., spacing between wheels) may be particularly selected based on the configuration and/or expected operation of the header. Furthermore, in the illustrated embodiment, each wheel 410 is coupled (e.g., rotatably coupled) to the header frame 210. However, in other embodiments, at least one wheel may be coupled to any other suitable structure(s) of the agricultural harvester (e.g., the cab, a body panel, the feeder house, the chassis, etc.).

In certain embodiments (e.g., in embodiments in which each row unit does not include a knife assembly or the knife assembly is not in operation), each wheel may be spaced from the surface of the field by a selected distance. Accordingly, the wheels 410 may direct the residue, which may extend from the surface of the field to a height greater than the selected distance, away from the field of view 306 of the camera 304, while enabling the crop material, which may extend from the surface of the field to a height less than the selected distance, to be present within the field of view 306 of the camera 304. Because the amount of residue within the field of view 306 of the camera 304 may be reduced, the camera may identify crop material (e.g., corn ears) within the region behind the header more effectively. As a result, the effectiveness of the crop loss monitoring system may be enhanced.

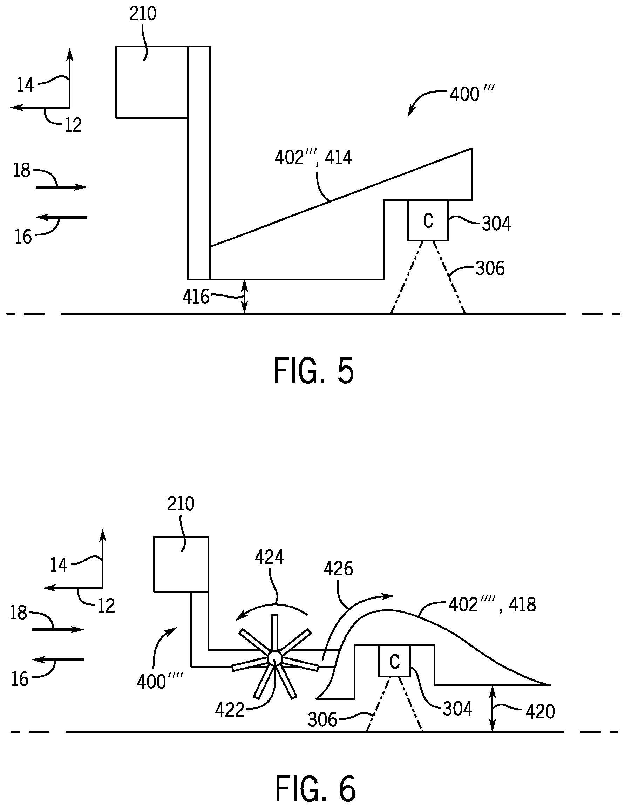

FIG. 5 is a schematic view of a further embodiment of a residue deflection assembly 400‴ that may be employed within the corn header of FIG. 2. In the illustrated embodiment, the residue deflection assembly 400'" includes a residue deflector 402‴ having a body 414 configured to engage the residue, thereby directing the residue away from the field of view 306 of the camera 304. In certain embodiments (e.g., in embodiments in which each row unit does not include a knife assembly or the knife assembly is not in operation), the body 414 is spaced from the surface of the field by a selected distance 416. Accordingly, the body 414 may direct the residue, which may extend from the surface of the field to a height greater than the selected distance, away from the field of view 306 of the camera 304, while enabling the crop material, which may extend from the surface of the field to a height less than the selected distance, to be present within the field of view 306 of the camera 304. Because the amount of residue within the field of view 306 of the camera 304 may be reduced, the camera may identify crop material (e.g., corn ears) within the region behind the header more effectively. As a result, the effectiveness of the crop loss monitoring system may be enhanced.

In the illustrated embodiment, the camera 304 is positioned on a bottom of the body 414 and directed toward the surface of the field. The body 414 is shaped to direct the residue over the body 414, thereby enabling the camera 304 to monitor the crop material on the surface of the field. Because the camera is positioned on the bottom of the body, the body may block a portion of the sunlight from entering the field of view. As a result, glare may be reduced, thereby increasing the effectiveness of identifying the crop material. However, because a portion of the sunlight is blocked, light(s) (e.g., LED(s), fluorescent light(s), etc.) may be employed to provide additional illumination (e.g., to the crop material).

While the body 414 is shaped to direct the residue over the body 414 in the illustrated embodiment, in other embodiments, the body may be shaped to direct the residue laterally outward from the body. In such embodiments, the camera may be positioned in another suitable location that enables the field of view to be directed toward the area from which the residue was displaced (e.g., the area with reduced residue resulting from the deflection caused by the body). For example, the camera may be coupled to the body, and the field of view may be directed laterally outward or longitudinally rearward of the body. Furthermore, while the body 414 has a wedge shape in the illustrated embodiment, in other embodiments, the body may have any other shape suitable for deflecting the residue, such as a curved shape. In addition, the body may be oriented at any suitable angle relative to the vertical axis 14, the longitudinal axis 12, the lateral axis, or a combination thereof. While the residue deflection assembly 400‴ has a single body 414 in the illustrated embodiment, in other embodiments, the residue deflection assembly may include more bodies (e.g., 2, 3, 4, or more). In the illustrated embodiment, the body 414 is coupled to the header frame 210. However, in other embodiments, the body may be coupled to any other suitable structure(s) of the agricultural harvester (e.g., the cab, a body panel, the feeder house, the chassis, etc.).

FIG. 6 is a schematic view of an embodiment of a residue deflection assembly 400ʺʺ that may be employed within the corn header of FIG. 2. In the illustrated embodiment, the residue deflection assembly 400ʺʺ includes a residue deflector 402ʺʺ having a body 418 configured to engage the residue, thereby directing the residue away from the field of view 306 of the camera 304. In certain embodiments (e.g., in embodiments in which each row unit does not include a knife assembly or the knife assembly is not in operation), the body 418 is spaced from the surface of the field by a selected distance 420. Accordingly, the body 418 may direct the residue, which may extend from the surface of the field to a height greater than the selected distance, away from the field of view 306 of the camera 304, while enabling the crop material, which may extend from the surface of the field to a height less than the selected distance, to be present within the field of view 306 of the camera 304. Because the amount of residue within the field of view 306 of the camera 304 may be reduced, the camera may identify crop material (e.g., corn ears) within the region behind the header more effectively. As a result, the effectiveness of the crop loss monitoring system may be enhanced.

In the illustrated embodiment, the camera 304 is positioned on a bottom of the body 418 and directed toward the surface of the field. The body 418 is shaped to direct the residue over the body 418, thereby enabling the camera 304 to monitor the crop material on the surface of the field. Because the camera is positioned on the bottom of the body, the body may block a portion of the sunlight from entering the field of view. As a result, glare may be reduced, thereby increasing the effectiveness of identifying the crop material. However, because a portion of the sunlight is blocked, light(s) (e.g., LED(s), fluorescent light(s), etc.) may be employed to provide additional illumination (e.g., to the crop material).

In the illustrated embodiment, the residue deflection assembly 400ʺʺ includes a reel 422 configured to cooperate with the body 418 to direct the residue away from the field of view 306 of the camera 304. In certain embodiments, the reel 422 is configured to be driven in a rotational direction 424 by a motor (e.g., electric motor, pneumatic motor, hydraulic motor, etc.), thereby driving the residue to move over the body 418 along a movement direction 426. However, in other embodiments, the reel may be driven to rotate via contact with another object (e.g., a motor is not coupled to the reel). For example, the reel may be driven to rotate via contact with the surface of the field, or the reel may be driven to rotate via contact with the residue. In the illustrated embodiment, the reel 422 is spaced from the surface of the field by the same distance as the body 418. However, in other embodiments, the spacing between the reel and the field surface may be greater or less than the spacing between the body and the field surface.

In the illustrated embodiment, the body 418 has a curved shape to facilitate directing the residue over the body. However, in other embodiments, the body may have any other shape suitable for deflecting the residue, such as a wedge shape. In addition, the body may be oriented at any suitable angle relative to the vertical axis 14, the longitudinal axis 12, the lateral axis, or a combination thereof. While the residue deflection assembly 400ʺʺ has a single body 418 and a single reel 422 in the illustrated embodiment, in other embodiments, the residue deflection assembly may include more bodies (e.g., 2, 3, 4, or more) and/or more reels (e.g., 2, 3, 4, or more). In the illustrated embodiment, the body 418 and the reel 422 are coupled to the header frame 210. However, in other embodiments, the body and/or the reel may be coupled to any other suitable structure(s) of the agricultural harvester (e.g., the cab, a body panel, the feeder house, the chassis, etc.). Furthermore, in the illustrated embodiment, the rotational axis of the reel 422 is parallel to the lateral axis. However, in other embodiments, the rotational axis of the reel may be oriented at any suitable angle(s) relative to the lateral axis, the vertical axis, the longitudinal axis, or a combination thereof. For example, in certain embodiments, the rotational axis of the reel may be parallel to the vertical axis.

With regard to the embodiments disclosed above with reference to FIGS. 4-6, the position of the wheel/body/reel is fixed relative to the header frame 210. However, in other embodiments, the residue deflection assembly may include actuator(s) configured to translate the wheel/body/reel (e.g., vertically, longitudinally, laterally, or a combination thereof) relative to the header frame. Additionally or alternatively, the residue deflection assembly may include actuator(s) configured to pivot the wheel/body/reel (e.g., about the vertical axis, about the longitudinal axis, about the lateral axis, or a combination thereof) relative to the header frame. The actuator(s) may be communicatively coupled to a controller (e.g., the crop loss monitoring system controller), and the controller may be configured to translate and/or pivot the wheel/body/reel during operation of the agricultural harvester. For example, the controller may periodically or cyclically lower the wheel/body/reel into contact with the residue, and the camera(s) may capture image(s) while the wheel/body/reel is in contact with the residue. Furthermore, with regard to the deflector assembly having the body, the controller may continuously translate and/or pivot the body (e.g., in a sweeping motion) to move the residue away from the field of view of the camera.

In certain embodiments, the crop loss monitoring system may include one or more of the residue deflection assemblies disclosed above, in any suitable combination. For example, in certain embodiments, the crop loss monitoring system may include one or more residue deflection assemblies including a fluid source/fluid outlet, one or more residue deflection assemblies including a wheel, one or more residue deflection assemblies including a body, one or more residue deflection assemblies including a body and a reel, one or more residue deflection assemblies having other suitable residue deflector(s), or a combination thereof. Furthermore, while certain residue deflection assemblies are disclosed herein, in certain embodiments, the crop monitoring system may include another suitable residue deflection assembly having other suitable residue deflector(s) (e.g., including tine(s), rod(s), cylinder(s), plate(s), etc.) configured to direct residue away from a field of view of a camera and to enable crop material to be present within the field of view of the camera. In addition, with regard to any of the residue deflection assemblies disclosed above, one or more lights may be employed (e.g., at least in low light conditions) to provide additional illumination for the camera(s).

In certain embodiments, the header may include one or more flaps configured to direct residue toward the surface of the field. For example, in embodiments having an operational knife assembly, the flap(s) may direct the residue moving through the air toward the surface of the field. Accordingly, the residue may lay on the surface of the field within the region behind the header (e.g., similar to embodiments in which each row unit does not include a knife assembly or the knife assembly is not in operation). For example, with regard to the residue deflection assembly having a fluid source/fluid outlet, the fluid outlet may be positioned proximate to the surface of the field. Furthermore, with regard to the residue deflection assembly including a wheel, the wheel may be spaced from the surface of the field. In addition, with regard to the residue deflection assembly including a body, the body may be spaced from the surface of the field by a selected distance. Furthermore, with regard to the residue deflection assembly including a body and a reel, the body and the reel may be spaced from the surface of the field. Accordingly, the residue deflector may direct residue on the surface of the field away from a field of view of a camera of the crop loss monitoring system and enable crop material to be present within the field of view of the camera.

While each residue deflector is positioned rearward of the row units of the header of the agricultural harvester in the embodiments disclosed above, in certain embodiments, at least a portion of the residue deflector may longitudinally overlap a row unit (e.g., overlap a row unit with respect to the longitudinal axis). For example, in certain embodiments, a portion of at least one wheel may longitudinally overlap a row unit of the header, a portion of at least one body may longitudinally overlap a row unit of the header, a portion of at least one reel may longitudinally overlap a row unit of the header, or a combination thereof. Furthermore, a portion of at least one residue deflector (e.g., conduit, hose, tube, pipe, etc.) having a fluid outlet may longitudinally overlap a row unit of the header. In addition, in certain embodiments, an entirety of at least one residue deflector (e.g., conduit, hose, tube, pipe, etc.) having a fluid outlet may longitudinally overlap a row unit of the header, or at least a portion of (e.g., an entirety of) at least one residue deflector (e.g., conduit, hose, tube, pipe, etc.) having a fluid outlet may be positioned in front of a row unit relative to the direction of travel of the agricultural harvester.

While only certain features have been illustrated and described herein, many modifications and changes will occur to those skilled in the art.

The techniques presented and claimed herein are referenced and applied to material objects and concrete examples of a practical nature that demonstrably improve the present technical field and, as such, are not abstract, intangible or purely theoretical.

## Claims

1. A residue deflection assembly (400) for a crop loss monitoring system (300), comprising:
a residue deflector (402) configured to be positioned rearward of a row unit (204) of a header (200) of an agricultural harvester (100) relative to a direction of travel (16) of the agricultural harvester, wherein the residue deflector is configured to direct residue away from a field of view (306) of a camera (304) of the crop loss monitoring system and to enable crop material to be present within the field of view of the camera.

2. The residue deflection assembly (400) of claim 1, comprising a fluid source (404), wherein the residue deflector (402) comprises a fluid outlet (406) configured to direct a flow of fluid (408) from the fluid source to the residue to direct the residue away from the field of view (306) of the camera (304).

3. The residue deflection assembly (400) of claim 2, wherein the fluid outlet (406) is configured to direct the flow of fluid (408) at least partially crosswise to the direction of travel (16) of the agricultural harvester (100).

4. The residue deflection assembly (400) of claim 1, wherein the residue deflector (402) comprises a wheel (410) configured to engage the residue to direct the residue away from the field of view (306) of the camera (304).

5. The residue deflection assembly (400) of claim 4, comprising a motor (412) configured to drive the wheel (410) to rotate.

6. The residue deflection assembly (400) of claim 1, wherein the residue deflector (402) comprises a body (414) configured to engage the residue to direct the residue away from the field of view (306) of the camera (304).

7. The residue deflection assembly (400) of claim 6, comprising a reel (422) configured to cooperate with the body (414) to direct the residue away from the field of view (306) of the camera (304).

8. A crop loss monitoring system (300), comprising:
a camera (304) directed toward a region (302) behind a header (200) of an agricultural harvester (100) relative to a direction of travel (16) of the agricultural harvester; and
a residue deflection assembly (400) as claimed in any preceding claim.

9. The crop loss monitoring system (300) of claim 8, wherein the camera (304) is positioned on a bottom of the body (414).

10. A header (200) of an agricultural harvester (100), comprising:
a row unit (204); and
a crop loss monitoring system (300) as claims in claim 8 or 9.
